# EUROPEAN PATENT APPLICATION

(11) **EP 2 728 708 A2**
(43) Date of publication of application: **07.05.2014**
(21) Application number: 12742969.4
(22) Date of filing: 01.06.2012
(51) Int. Cl.: H02J 9/06, H02J 3/38

(54) **"ENERGY MANAGEMENT EQUIPMENT"**

(30) Priority: 03.06.2011 PT 2011105742
(71) Applicant: ABEL DE LACERDA - CONDE DE RIBADOURO, UNIPESSOAL, LDA, 1150-229 Lisboa (PT)
(72) Inventor: SILVA CONDEÇO, Joaquim Alexandre da, 2840-327 Seixal (PT)
(74) Representative: Pereira da Cruz, Joao
(86) International application number: PCT/PT2012/000020
(87) International publication number: WO 2012/165986

(57) **Abstract**

This invention relates to an equipment intended for energy management which uses the cleaner and the cheaper energy in any consumption period, by switching between the different sources available in order to provide a more sustainable energy to the installation unit with uninterruptible supply of electric power. It is basically characterized in that different input voltages are passed through the rectifier system, subsequently through the battery banK, then leading them to the output with the preset voltage and frequency, comprising to that purpose, inside a sealed cabinet with insulation class II, IP 65 and IK 1, being climatized and provided with a fire detector, intrusion alarm, geolocalization means and remote control;-A rectifier (1) of the current from several energy generating sources which is comprised of conversion modules capable of summing up them and through which passes all the energy supplied; A battery bank (2);- An inverter (3); - One or more electric power inputs (4) from, at least, one or more energy generating sources; - At least one power output (5) with the established and corrected voltage and frequency according to standardized patterns.

## Description

### Scope of the invention

This invention relates to an equipment intended for energy management. More particularly, it relates to a concentrator of different sources for electric power generation, which is capable of agglutinating and summing up them in order to reach a voltage higher than that produced by each one of the energy sources individually.

This equipment is prepared to receive variable energy sources such as wind, photovoltaic systems, cogeneration, generator, distribution networks, water, additionally to other currently available sources.

On the other hand, it has the capacity of selecting by itself the source or sources which will be used as the power output, taking into account previously established parameters, these depending on the location where it is installed, and which may be associated to economical reasons, such as a lower cost of energy generation or even a more reliable support for energy generation upstream of the equipment.

Besides being a concentrator of energy sources, thus allowing to sum up several voltages, it also operates as an uninterrupted power supply (UPS) unit which is capable of maintaining its peak voltage in this regimen for a maximum of 12 hours, this time period varying according to the voltage being consumed.

### Prior art

The use of concentrators of different energy sources is already known in the art. Some examples of this are the documents CN 1971039 and JP 2004015035.

The document CN 1971039 relates to an equipment supplying green energy resources to households, which is comprised of a wind turbine, solar panels, sports equipment, wherein human being would be the driving force which would generate the electric power. The existence of batteries and inverters is also mentioned in the said document.

The patent application JP 2004015035 relates to a home power generation system which is particularly aimed at supplying energy in case of a power failure in the network. It is configured of a battery such as a solar cell 1 or a fuel cell and an inverter so as to convert the DC output voltage from the battery into AC power, as well as of a control part.

These and other known systems are substantially distinct from the object of this patent application.

### Summary of the invention

This invention relates to an equipment intended for energy management which uses the cleaner and the cheaper energy in any consumption period, by switching between the different sources available in order to provide a more sustainable energy to the installation unit with uninterruptible supply of electric power. It is basically characterized in that different input voltages are passed through the rectifier system, subsequently through the battery bank, and then supplying them to the output with the preset voltage and frequency.

### Brief description of the drawings

The following description is based on the enclosed drawings wherein, without a limiting character, are illustrated:
- In figures 1 and 2, simplified diagrams of the equipment;
- In figure 3, an example of a mode of operation of the equipment being the object of the invention; and

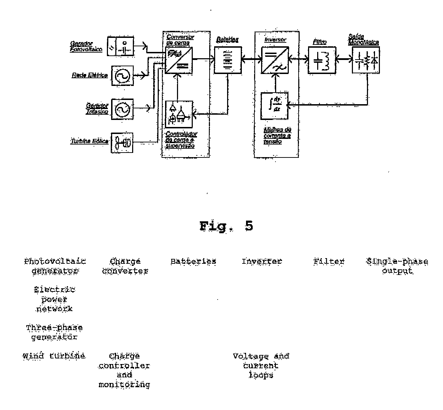

- In figures 4 and 5, operating charts of the equipment.

### Detailed description of the invention

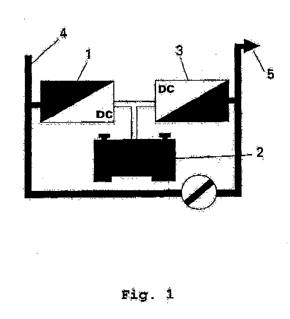

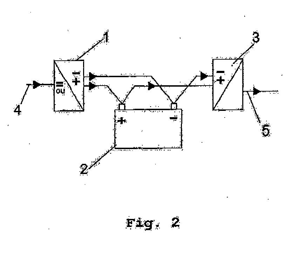

As can be observed in the simplified diagrams of figures 1 and 2, the equipment is essentially comprised of a rectifier 1, a battery bank 2 and an inverter 3. The power received in 1 comes from different energy sources such as wind, photovoltaic, cogeneration, generator, public distribution networks or other. Basically, this equipment operates in a very simple way, causing different input voltages to pass through its rectifier system, subsequently through its batteries, and after this process it provides them to the output with the preset voltage and frequency, these being already corrected according to standardized patterns.

Being intended for energy management, this equipment is capable of switching between the different energy sources available in order to provide a more sustainable energy to the installation unit, the latter being in all cases fed with electric power.

The switching or inversion of sources is imperceptibly provided to the installation thanks to its normal operation as an uninterruptible power supply (UPS) unit, since all the energy supplied is passed both through the rectifier component 1 and the battery bank 2, thus ensuring the absence of undesirable fluctuations in the electric power supply.

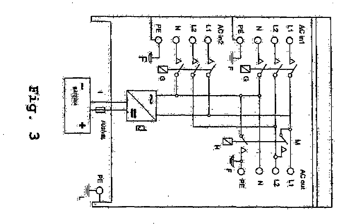

In figure 3 the operating mode of this equipment is schematically illustrated as a power circuit provided with two alternative inputs.

This equipment also operates as an output current and frequency rectifier, thus avoiding the harmonic currents and having a reliable stability of line voltage and single voltage, irrespectively of the values or amounts of voltages or frequencies feeding the equipment input. These output voltages are susceptible of being programmed and adjusted according to the needs and specifications for each use, the said parameters being modifiable at any time.

It can have three outputs from the inverter, each one of them being programmed according to the desired voltages per circuit. The equipment will manage this resource and limit the use of the said voltage, thus avoiding overloads in the installation units being supplied by it. Accordingly, overloads on the energy generating equipments upstream are also avoided, which could cause serious damages.

The surplus of the generated energy which is made available may be directed, for instance, to the distribution network. It can be also applied to the charging of batteries or it can be simply rejected by opening the input breakers of these autonomous generation systems. By charging the batteries, the equipment is safeguarding an eventual need of using them to supply for a longer period the electrical installations downstream of the equipment, which are served by its maximum voltage, thus avoiding a number of troubles resulting from undesirable power failures.

As already mentioned above, the equipment performing the energy management will, whenever required, operate the energy generating devices which are coupled to it, such as for instance electric generators, thus allowing, in this specific case, fortnightly start-ups to be made as recommended by manufacturers and for the period previously established by the operator. The alarms and generator operation can also be managed on a computer platform, which is made available by Internet and permanently on-line, provided with software for the management of the equipment being the object of this invention. This function is very useful both for controlling consumptions and in case of a breakdown in the equipment.

This equipment is aimed at protecting and extending the lifetime of the installation units serving it, as well as the ones it serves, and also its own working life. To that effect, the equipment regenerates the charge of its internal batteries in an intelligent way so that they are not constantly with the maximum charge, however not lowering the charge to values which could cause damage to them, thus keeping the charge and life cycles at their peak values for a better performance. The life cycle parameters for each battery are given by the manufacturer and programmed in this equipment so that it monitors and ensures a proper functioning of the same, since in case there is an inapproppriate slight discharge of the batteries the absorption is decreased in order to avoid overload and excessive formation of gases. After a complete discharge, the absorption time is automatically increased so that the battery is fully charged. In case of prolonged absence of energy consumption on the installation unit served by this equipment, and in order to maintain it operational as much as possible, the equipment has an internally established "self-maintenance" which puts it under resistive loads with a view to cause a consumption in the batteries, so that there is a slight discharge and a complete cycle is performed keeping them active.

The equipment which is the object of this invention is also provided with two Direct Current outputs allowing for an expansion in its autonomy, only requiring the purchase of the appropriate battery groups.

The equipment is further comprised of a control panel (summary table) wherein eventual malfunctions can be checked as well as all the operations being performed at a given time. The said panel is provided with an ON-OFF switch enabling the equipment to be stopped.

Additionally, this equipment can also remain in Stand-by mode while the internal batteries are being charged For that purpose, it comprises a "Charger Only" switch which, when selected, operates exclusively the battery charger, ensuring the Completion of life cycles (full charge and discharge) for a greater lifespan. At the same time, when the "Charger Only" position is selected, the equipment will be inoperable in respect of its function as uninterruptible power supply unit, keeping only the operation of its switching systems between different power input sources and the relevant correction of the preset parameters (voltage and frequency), thus ensuring the supply to downstream installation units.

The said control panel is also provided with a display allowing the instantaneous current entering in the equipment to be checked, as well as with a potentiometer in order to adjust the admissible current. Although a manual adjustment is not possible, the system itself does not allow the value previously defined by software to be exceeded.

As mentioned, the system maintains the charge of the batteries in the maximum levels Which are admissible and recommended by the manufacturers, charging them with a voltage slightly higher than its nominal voltage (increased by 1 volt) during 1 hour, and then limiting the charging current to 1/4 of batteries nominal value. When this process - which is called "Equalization Mode" - starts its operation, the equipment supplies the batteries with a charging voltage which is above the one supported by most devices consuming direct current (DC).

Basically, the battery bank is comprised of traction batteries and of a container for distilled water to be automatically refilled (not illustrated in the figures) in order to permanently maintain the electrolysis at its best level.

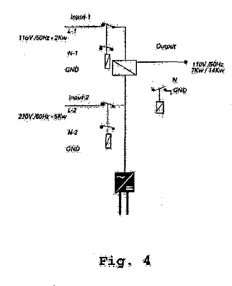

Several configurations can be made. For example, one can have two power inputs with alternating current (AC), both of them of the three-phase type, the equipment then triplicating and summing (coupling) the inputs in one output only or in more than one output. Several possible input voltages are coupled and modified in the aforementioned components of the equipment. Figure 4 schematically illustrates the capacity of the equipment to receive voltages or frequencies on its inputs, which are different from the ones previously defined for its output. It also shows that the input voltages can be of the three-phase or single phase type, each one of these being duly treated by the components of the equipment in order to obtain in the output a preset value for another type of voltage or frequency. In the example depicted in figure 4, the output voltage is also adjusted and it can be two times higher than the total sum of its input voltages.

This equipment is configured as a modular system in order to make its coupling easier in case of need at any time For an exponential increase of the desired voltage, other identical systems can be put in parallel and thus reach the intended voltage values. Thanks to its architecture, the equipment is also totally mobile and it can be displaced to different locations whenever required.

In order to manage all the parameters involved, the system has its own software Therefore, the voltages available in the various inputs are analysed and then used from the bottom to the top values and, when the energy consumption falls, the equipment discards the voltage keeping in "Stand-by" approximately 20% of the voltage for an eventual start-up or spontaneous need.

It is also possible to select a search mode so that the input to be used is optimized, which can be tuned with the network management software in order to obtain energy-costs ratios at the moment where the addition of voltage is required. If this search mode is activated, the consumption in no-load operation will be reduced by around 70%, the equipment being kept in "Stand-by" and performing a cycle in the battery bank.

When the equipment operates in inverter mode, it will turn off if there are no significant consumptions and then turn on again every two seconds for a short period of time. If the output voltage is higher than the preset level, the inverter will continue to be in operation. Otherwise, the inverter mode returns to "Stand-by" and the voltage levels will be configured in the software of the inverter mode.

For a better performance in terms of harmonization of voltages, this equipment comprises an earth connected relay on the output neutral line, thus ensuring an increased control of the leakage currents, the said currents being protected and monitored by selective circuit breakers of very high sensitivity.

This equipment is also flexible to the point of supporting medium or high voltage in its output, from 3 KV to 60 KV, for the supply of public or private power distribution networks, thanks to the use of "Fet Groups" of the IGBT-type (Insulated Gate Bipolar Transistor) and also to the fact that it is provided with internal transformers for those voltages.

Both the inputs and the outputs, even those with low voltages between 110 V/440 V and a nominal current of 125 A, will be made by EEC-type plugs positioned in the outer surface of the equipment's case. Whenever this is not possible, those connections well be accomplished by means of terminals inside the equipment, in a location with access restricted to the authorized servicing staff.

All of the aforementioned systems, components or modules are installed within a purpose-built cabinet and tailored to each equipment. The said cabinet (not illustrated in the figures) is comprised of steel tubes and coated with sandwich-type panels, its pavement being of the same material as the walls. This cabinet is sealed, according to Insulation Classes II, IP 65 and IK 10. It is also climatized and provided with a fire detector and an intrusion alarm. Additionally, it has geolocalization means and remote control by the GSM system or other to be defined.

The following table shows an example of the characteristics as regards an embodiment of the invention with 10KVA.

| **INPUT** | |
|---|---|
| Voltage | 230/440 vac +/- 2% Frequency 50 Hz +/- 0,1 % |

| **OUTPUT** | |
|---|---|
| Continuous output voltage at 25°C (VA) | 10.000 |
| Continuous output voltage at 25°C (W) | 9.000 |
| Continuous output voltage at 40°C (W) | 8.000 |
| Maximum output voltage (W) | 20.000 |
| Efficiency at maximum voltage (%) | 96 |

| **BATTERIES** | |
|---|---|
| Maximum charge in Volt | 28,8 |
| Fluctuating mode charge in Volt (V DC) | 27,6 |
| Maintenance charge (V DC) | 26,4 |
| Maximum currant in (A) | 200 |

| **AUXILIARY ELEMENTS** | |
|---|---|
| Battery temperature sensor | Yes |
| Auxiliary output (A DC) | 25 |
| Programmable relay | Yes |
| Protection fuse (2) | a-g |
| Monitoring | Yes |
| USB terminal | Yes |
| | |

| **OPERATING CONDITIONS** | |
|---|---|
| Temperature | >-20 <+50°C |
| Relative Humidity | 95% |

There are several modifications susceptible of being introduced to the herein disclosed embodiments. The scope of protection granted shall be limited only in the light of the following claims.

## Claims

1. An equipment intended for energy management which uses the cleaner and the cheaper energy in any consumption period, by switching between the different sources available in order to provide a more sustainable energy to the installation unit with uninterruptible supply of electric power, **characterized in that** different input voltages are passed through the rectifier system, subsequently through the battery bank, then leading them to the output with the preset voltage and frequency, comprising to that purpose, inside a sealed cabinet with insulation classes II, IP 65 and IK 1, being climatized and provided with a fire detector, intrusion alarm, geolocalization means and remote control:
- A rectifier (1) of the current from several energy generating sources which is comprised of conversion modules capable of summing up them and through which passes all the energy supplied;
- A battery bank (2);
- An inverter (3);
- One or more electric power inputs (4) from, at least, one or more energy generating sources,
- At least one power output (5) with the established and corrected voltage and frequency according to standardized patterns.

2. An equipment intended for energy management according to the previous claim, **characterized in that** the energy generating sources connected to the rectifier (1) can be: the public power supply network, solar modules, generators, wind modules, wherein at least one of the outputs is connected to any energy consuming sources.

3. An equipment intended for energy management according to the previous claims, **characterized in that** the rectifier (1) has associated a charge controller and monitoring while the inverter (3) has a associated a current, voltage and frequency control unit.

4. An equipment intended for energy management according to the previous claims, **characterized in that** the battery bank (2) is comprised of at least two traction batteries and one container far distilled water to be automatically refilled in order to maintain the electrolysis level.

5. An equipment intended for energy management according to the previous claims, **characterized in that** there is a control panel which is provided with:
- an On/off switch;
- a switch which, when selected, operates exclusively the battery charger;
- a display unit for checking the instantaneous current entering into the equipment and a potentiometer for adjusting that same admissible current.

6. An equipment intended for energy management according to the previous claims, **characterized in that** it further comprises an earth connected relay on the output neutral line, with the leakage currents being monitored by the said relay and protected and monitored by differential circuit breakers.

7. An equipment intended for energy management according the previous claims, **characterized in that** it additionally comprises groups of Insulated Gate Bipolar Transistors (IGBT) and transformers.

8. An equipment intended for energy management according to the previous claims, **characterized in that** it operates as a concentrator of energy sources and as an uninterruptible power supply unit which is capable of maintaining its peak voltage in this regimen for a maximum of 12 hours, this time period varying according to the voltage being consumed.

9. An equipment intended for energy management according to the previous claims, **characterized in that** it operates as an output current and frequency rectifier, irrespectively of the values or amounts of feeding voltages and frequencies.

10. An equipment intended for energy management according to the previous claims, **characterized in that** each output is programmed according to the desired voltage per circuit.

11. An equipment intended for energy management according to the previous claims, **characterized in that** it can be increased up to voltages higher than the one previously projected by the coupling of modules.

12. An equipment intended for energy management according to the previous claims, **characterized in that**, whenever required, the said equipment operates the energy generating devices which are coupled to it, with the possibility for the whole management to be performed by Internet and permanently on-line.

13. An equipment intended for energy management according to the previous claims, **characterized in that** it further comprises battery temperature sensors, a programmable relay and protection fuses,

14. An equipment intended for energy management according to the previous claims, **characterized in that** the operating temperature is within the range of from -20 to +50°C and the relative humidity is 95%.

15. The software for management of the equipment mentioned in the previous claims is **characterized in that**:
- It analyses the voltages available in the various inputs, using them from the bottom to the top values and, when the energy consumption falls, the equipment discards the voltage keeping in a reserve position about 20% of the voltage for an eventual start-up or spontaneous need.
- It checks the input instantaneous current add establishes a maximum value to the same;
- It manages all the components by means of the available data.
